# EUROPÄISCHE PATENTSCHRIFT

(11) **EP 0 420 162 B1**
(45) Veröffentlichungstag und Bekanntmachung des Hinweises auf die Patenterteilung: **03.05.1995**
(21) Anmeldenummer: 90118414.3
(22) Anmeldetag: 25.09.1990
(51) Int. Cl.: H01G 4/30, H01G 13/06

(54) **Verfahren zum Herstellen eines elektrischen Leistungskondensators in Stapelbauweise**
Process for manufacture of a stacked electrical power capacitor
Procédé de fabrication d'un condensateur électrique de puissance empilé

(30) Priorität: 26.09.1989 DE 3932104
(43) Veröffentlichungstag der Anmeldung: 03.04.1991
(73) Patentinhaber: SIEMENS AKTIENGESELLSCHAFT, 80333 München (DE)
(72) Erfinder: Vetter, Harald, D-7920 Heidenheim (DE)

(56) Entgegenhaltungen:
- EP-A- 0 194 044
- FR-A- 2 497 393
- GB-A- 2 143 087
- US-A- 3 506 895
- BAUTEILE REPORT SIEMENS. Bd. 14, Nr. 1, Februar 1976, MUNCHEN DE 'METALLISIERTE KUNSTSTOFFKONDENSATOREN'

## Beschreibung

Die Erfindung betrifft ein Verfahren zum Herstellen eines elektrischen Leistungskondensators gemäß dem Oberbegriff des Anspruchs 1.

Ein solches Verfahren, bei dem die metallfreien zonen in Längsrichtung der Bänder gebildet werden, ist aus der FR-A-2 497 393 bekannt.

Bei der Herstellung von Leistungskondensatoren sind im allgemeinen zwei wesentliche Bauarten bekannt:
1) Selbstheilende Kondensatoren, bei denen auf ein stabiles Kernrohr mit einer Wickelmaschine metallisierte Folien aus Kunststoff und/oder Papier zu einem Kondensatorwickel gespult und stirnseitig mit einem Metallspritzverfahren (z.B. Schoopverfahren) kontaktiert werden. Die so hergestellten Wickel werden über geeignet geführte Leitungen zu einem Stapel geschaltet und anschließend hauptsächlich in ein rohrförmiges Gehäuse eingebaut.
2) Nicht selbstheilende Kondensatoren werden meist ohne Kernrohr hergestellt, wobei mit einer Wickelmaschine Aluminiumfolien mit Kunststoff- und/oder Papierbändern in einem ersten Arbeitsschritt zu einem Kondensatorwickel gespult werden. Anschließend werden diese Wickel zu einem Flachwickel gepreßt und zu einem Stapel montiert. Die Kontaktierung erfolgt in der Regel über Einlegestreifen aus Aluminium und/oder durch Reiblotkontaktierung der Leitungen mit den überstehenden Aluminiumfolien. Die Flachwickelstapel werden dann in quaderförmige Gehäuse eingebaut.

Das technische Volumen der in rohrförmige Gehäuse eingebauten selbstheilenden Kondensatoren ist (z.B. bei Durchmesser = Kantenlänge) um den Faktor π/4 ungünstiger als bei der üblichen, quaderförmigen Gehäuseform der nicht selbstheilenden Kondensatoren (sonst gleiche technologische Randbedingungen unterstellt). Die Oberfläche ist bei runder Bauweise und gleichem technischen Volumen ebenfalls um den Faktor π/4 kleiner als bei quaderförmiger Gehäuseform. Daraus ergibt sich, daß bei einer thermischen Modellrechnung die Hot-Spot-Temperatur des betrachteten aktiven Kondensatorvolumens bei runder Bauweise um den Faktor (π/4)² niedriger liegt, bzw. ein Effekt entsteht, der virtuell eine um den Faktor 1,6 höhere Wärmeleitfähigkeit des Wickelstapels im Rechteckgehäuse darstellt.

Die zulässige Verlustleistung eines Kondensators im rechteckigen Gehäuse ist deshalb bei konstanter Hot-Spot-Temperatur größer als bei einem dazu vergleichbaren zylindrischen Gehäuse. Auch aus dieser Sicht ist eine quaderförmige Bauform für einen selbstheilenden Leistungskondensator erstrebenswert.

Die Technologie der geschichteten, selbstheilenden Kondensatoren für kleine Leistungen und Spannungen ist bekannt. Hier wird analog zur Wickeltechnik bei selbstheilenden Kondensatoren ein Folienstrang auf ein Wickelrad gespult und kontaktiert. Der so erzeugte, ringförmige Mutterkondensator wird in einem weiteren Arbeitsschritt durch Sägen quer zur Laufrichtung in Einzelkondensatoren getrennt.

Die erreichbare Spannungsfestigkeit der so getrennten Schichtkondensatoren ist aber vergleichsweise gering und kann keinesfalls auf die Forderungen der VDE 0560 T12 mit U_{B/B} = (U_{N} / √2) x 2,15 gesteigert werden.

Um diese Forderung mit einem geschichteten Leistungskondensator erfüllen zu können, muß eine belagfreie Zone quer zur Folienlaufrichtung (mittig zum Trennschnitt) mindestens in der gleichen Größenordnung wie der beim Kondensatorwickel dimensionierte Freirand erzeugt werden.

Der vorliegenden Erfindung liegt die Aufgabe zugrunde, ein Verfahren zur Herstellung eines elektrischen Leistungskondensators in Stapelbauweise anzugeben, das den notwendigen Freirand (ggf. im Schnittbereich) quer zur Folienlaufrichtung besonders wirtschaftlich beim Wickelvorgang erzeugt und so die vorgenannten Vorteile einer quaderförmigen Gehäuseform mit den Vorteilen eines geschichteten Kondensatoraufbaus verbindet, um weitere Anwendungen in der Leistungselektronik zu eröffnen.

Diese Aufgabe wird durch die erfindungsgemäßen Merkmale des Anspruchs 1 gelöst.

Zweckmäßige Ausgestaltungen des Verfahrens sind in den Unteransprüchen angeführt.

Die Erfindung wird anhand der folgenden Ausführungsbeispiele erläutert.

In der dazugehörenden Zeichnung zeigen:
- FIG 1: ein Wickelverfahren mit Flachdorn,
- FIG 2: eine Ausführungsform eines verlorenen Flachdorns,
- FIG 3: ein Ausführungsbeispiel, bei dem Kondensatoren auf ein Rad gewickelt werden,
- FIG 4: den schematischen Aufbau eines Kondensators aus zwei metallisierten Kunststoffbändern,
- FIG 5: einen Querschnitt der FIG 4,
- FIG 6: ein weiteres Ausführungsbeispiel eines Kondensators aus zwei Kunststoffbändern,

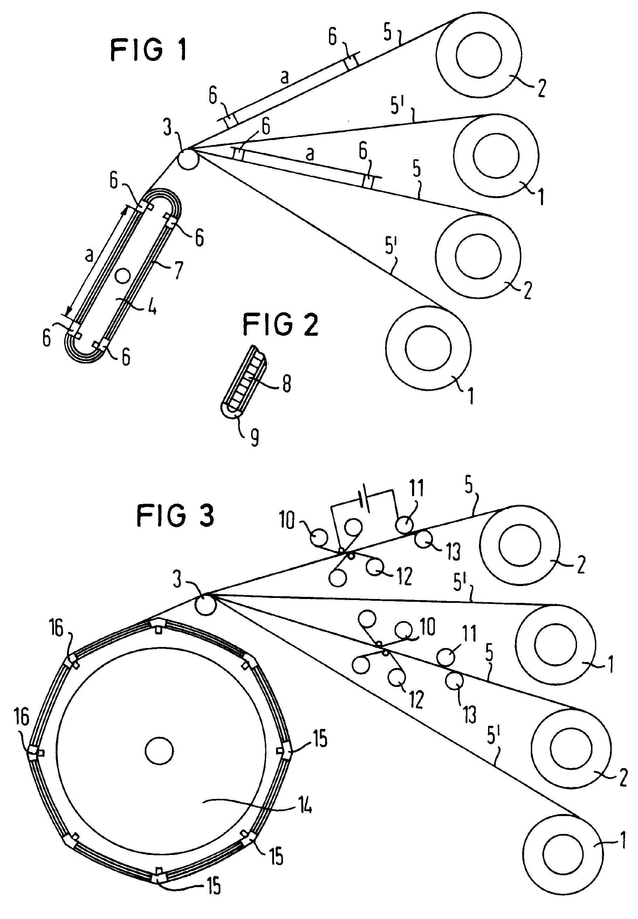

In der FIG 1 ist die Herstellung eines geschichteten Leistungskondensators dargestellt, dessen Dielektrikum aus Polypropylenbändern 5′ besteht, die von der Vorratsrollen 1 abgespult werden. Die regenerierfähig dünnen Metallschichten sind auf Papierbändern 5 angeordnet, die von den Vorratsrollen 2 abgewickelt werden.

Bevor die vier Bänder über eine zentrale Umlenkrolle 3 auf einen Flachwickeldorn 4 aufgespult werden, werden die metallisierten Papierbänder 5 an in der FIG 1 nicht dargestellten Demetallisierungsvorrichtungen vorbeigeführt und mit metallfreien Zonen 6 versehen, die in einem derartigen Abstand a voneinander angeordnet sind, daß sie auf dem Wickeldorn 4 übereinanderliegen. Nach fertiggestellter Wicklung wird der Flachwickel 7 vom Wickeldorn 4 entfernt und im Bereich der metallfreien Zonen 6 ein Sägeschnitt durchgeführt. Vorher oder hinterher kann die Kontaktierung der Stirnseiten mit Schoopschichten erfolgen, so daß der Kondensatorflachwickel 7 weiterverarbeitet werden kann.

In der FIG 2 ist eine weitere Ausführungsform dargestellt, bei der der Kondensator auf einen sogenannten verlorenen flachen Dorn 8 aufgewickelt ist. Der Dorn 8 besteht vorzugsweise aus Kunststoff und ist z.B. in Stegdoppelplattenform hergestellt. Bei dieser Ausführungsform ist es zweckmäßig, die metallfreie Zone 9 in den Bereich des Radius zu verlegen und auf einen Sägeschnitt dort zu verzichten.

In der FIG 3 ist ein Ausführungsbeispiel dargestellt, bei dem metallisierte Papierbänder 5 von Vorratsrollen 2 und Kunststoffbänder 5′ von Vorratsrollen 1 über eine zentrale Umlenkrolle 3 auf einen Wickeldorn 14 aufgespult werden, der als Rad mit über Anschlußradien verbundenen Vielecken ausgebildet ist. Die theoretische Verbindungslinie zwischen den Ecken 16 wird mit vergleichsweise großem Radius oder als Kurve gleicher Biege- bzw. Zugspannung ausgebildet. An den Ecken des Vielecks liegen die demetallisierten Zonen 15 übereinander. Die Demetallisierungsvorrichtungen 10, 11 werden über ein geeignetes Schaltelement vom Wickeldorn 14 so angesteuert, daß die Forderung nach übereinanderliegenden demetallisierten Zonen 15 erfüllt werden.

Die Demetallisierungsvorrichtung 10, 11 besteht vorzugsweise aus einer Kontaktrolle 11 und einem Demetallisierungsrollensatz 10 mit Al-Folie. Die Aktivierung der Vorrichtung geschieht vorzugsweise durch Einschwenken von mindestens einer Rolle mit dem Ziel, einen guten elektrischen Kontakt zwischen 10 und 11 herzustellen. Nicht aktiviert sollen die Bänder 5 möglichst ohne Berührung durch die Demetallisierungsvorrichtung durchlaufen.

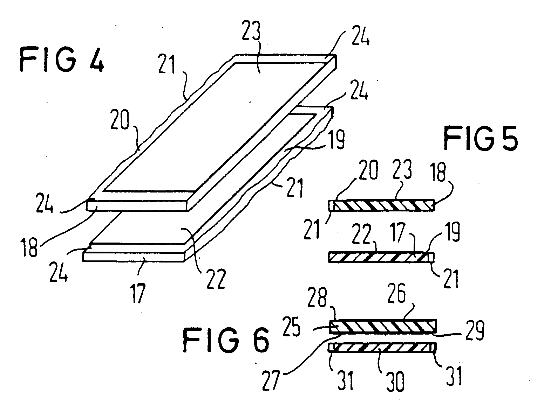

In der FIG 4 ist ein Kondensatorsaufbau dargestellt, der aus zwei Kunststoffbändern 17, 18 besteht, die mit regenerierfähigen Metallschichten 22, 23 versehen sind. Auf unterschiedlichen Seiten der Folien 17, 18 sind in Längsrichtung Freiränder 19, 20 angeordnet, damit bei der Kontaktierung der Stirnschichten kein elektrischer Kurzschluß zwischen den Elektroden 22, 23 auftreten kann. Im Bereich der Freiränder 19, 20 sind die Folien 17, 18 zweckmäßigerweise mit einem Wellenschnitt 21 versehen.

Quer zur Längsrichtung der Folien 17, 18 sind die metallfreien Zonen 24 angeordnet, die in der vorstehend aufgezeigten Weise erzeugt wurden.

FIG 5 zeigt im Querschnitt schematisch den in FIG 4 dargestellten Kondensatoraufbau.

In der FIG 6 ist ein weiterer Kondensatoraufbau im Querschnitt schematisch dargestellt, bei dem ein Kondensatoraufbau vorliegt, der aus einem beidseitig mit Metallschichten 26, 27 versehenen Kunststoffband 25 besteht. Die Freiränder 28, 29 sind auf unterschiedlichen Seiten des Bandes 25 entgegengesetzt angeordnet.

Um bei diesen Kondensatoraufbau Kurzschlüsse zwischen den Elektroden 26, 27 zu vermeiden, wird ein weiteres Kunststoffband 30 mit verwickelt, das nicht metallisiert ist und das zweckmäßigerweise an beiden Seiten bzw. einer Seite einen Wellenschnitt 31 besitzt.

Eine weitere Ausführungsform eines thermisch entlasteten Stapelkondensators besteht im wechselseitigen Aufbau Schichtstapel-Element/Steg-Doppelplatte, z.B. aus Polypropylen. Versuche haben gezeigt, daß damit eine erhebliche Reduzierung der Hot-Spot-Temperatur bereits ab 3 mm Stegabstand bei flüssigen Imprägniermitteln erreicht werden kann (siehe FIG 2).

Bei der Herstellung des geschichteten Elementarkondensators kann, neben der bekannten Möglichkeit, eine innere Reihenschaltung zu realisieren, auch wechselseitig z.B. eine Polyimid-Hostaphan-Verbundfolie eingespult werden. Dadurch erreicht man eine Reihenschaltung über den erzeugten Schoop-Schicht-Kontakt. Durch Kombination beider Techniken können vorteilhafte Reihenschaltungskombinationen realisiert werden.

## Patentansprüche

1. Verfahren zum Herstellen eines elektrischen Leistungskondensators in Stapel-Bauweise mit im wesentlichen rechteckigem Querschnitt, dessen Dielektrikum aus Kunststoffbändern (5′,17,18,25,30) besteht und dessen Elektroden aus Metallschichten (22,23,26,27) bestehen, die entweder auf den Kunststoffbändern (5′,17,18,25) selbst oder auf Papierbändern (5) aufgebracht sind, und bei dem die Metallschichten (22,23,26,27) vor dem Aufwickeln an Demetallisierungsvorrichtungen (10,11) vorbeigeführt werden, wobei metallfreie Zonen (6,9,15,24) in den Metallschichten (22,23,26,27) gebildet werden,
**dadurch gekennzeichnet,**
daß die Bänder (5, 5′, 17,18 25,30) auf einen geeignet geformten Wickeldorn (4,8,14) aufgewickelt werden, und daß die Metallschichten (22,23,26,27) durch die Demetalllsierungsvorrichtungen (10,11) quer zur Längsrichtung der Bänder (5, 5′,17,18,25,30) mit metallfreien Zonen (6,9,15,24,38) versehen werden, deren Abstand so gewählt wird, daß die metallfreien Zonen (6,9 15,24,38) auf dem Wickeldorn (4,8,14) übereinanderliegen.

2. Verfahren nach Anspruch 1, **gekennzeichnet** durch die Verwendung eines Flachwickeldorns (4, 8).

3. Verfahren nach Anspruch 2, **gekennzeichnet** durch die Verwendung eines verlorenen Flachwickeldorns (8).

4. Verfahren nach Anspruch 3, **gekennzeichnet** durch die Verwendung eines verlorenen Flachwickeldorns (8) in Steg-Doppelplatten-Ausführung.

5. Verfahren nach Anspruch 1, **gekennzeichnet** durch die Verwendung eines Wickeldorns (14), der als Rad mit über Anschlußradien verbundenen Vielecken (16) ausgebildet ist.

6. Verfahren nach mindestens einem der Ansprüche 1 bis 5, **gekennzeichnet** durch die Verwendung von regenerierfähigen Metallschichten als Elektroden.

7. Verfahren nach mindestens einem der Ansprüche 1 bis 5, **gekennzeichnet** durch die Verwendung von nicht regenerierfähigen, dicken Metallschichten als Elektroden.

## Claims

1. Method for producing an electrical power capacitor of stacked construction having essentially rectangular cross-section, whose dielectric comprises plastic strips (5′, 17, 18, 25, 30) and whose electrodes comprise metal layers (22, 23, 26, 27) which are deposited either on the plastic strips (5′, 17, 18, 25) themselves or on paper strips (5), and in the case of which the metal layers (22, 23, 26, 27) are guided past demetallizing devices (10, 11) before being wound, metal-free zones (6, 9, 15, 24) being formed in the metal layers (22, 23, 26, 27), characterized in that the strips (5, 5′, 17, 18, 25, 30) are wound on a suitably formed winding spike (4, 8, 14), and in that the metal layers (22, 23, 26, 27) are provided by the demetallizing devices (10, 11) transversely to the longitudinal direction of the strips (5, 5′, 17, 18, 25, 30) with metal-free zones (6, 9, 15, 24, 38) whose distance is selected in such a manner that the metal-free zones (6, 9, 15, 24, 38) lie on top of each other on the winding spike (4, 8, 14).

2. Method according to Claim 1, characterized by the use of a flat winding spike (4, 8).

3. Method according to Claim 2, characterized by the use of a lost flat winding spike (8).

4. Method according to Claim 3, characterized by the use of a lost flat winding spike (8) in web-double plate design.

5. Method according to Claim 1, characterized by the use of a winding spike (14) which is designed as wheel having polygons (16) connected by means of connecting radii.

6. Method according to at least one of Claims 1 to 5, characterized by the use of metal layers, which can be regenerated, as electrodes.

7. Method according to at least one of the Claims 1 to 5, characterized by the use of thick metal layers, which cannot be regenerated, as electrodes.

## Revendications

1. Procédé pour fabriquer, selon le mode à empilage, un condenseur électrique de puissance possédant une section transversale essentiellement rectangulaire et dont le diélectrique est constitué par des bandes de matière plastique (5′,17,18,25,30) et dont les électrodes sont constituées par des couches métalliques (22,23,26,27), qui sont déposées soit sur les bandes de matière plastique (5′, 17,18,25) elles-mêmes, soit sur des bandes de papier (5), et selon lequel, avant l'enroulement, on fait passer les couches métalliques (22,23,26,27) devant des dispositifs de démétallisation (10,11), des zones dépourvues de métal (6,9,15,24) étant formées dans les couches métalliques (22,23,26,27), caractérisé par le fait qu'on enroule les bandes (5,5′,17,18,25,30) sur un mandrin d'enroulement (4,8, 14) conformé de façon appropriée et que dans les couches métalliques (22,23,26,27) sont formées, par les dispositifs de démétallisation (10,11), des zones dépourvues de métal (6,9,15,24,38), qui s'étendent transversalement par rapport à la direction longitudinale des bandes (5,5′,17,18,25,30) et dont la distance réciproque est choisie de manière que les zones dépourvues de métal (6,9,15,24,38) sont superposées sur le mandrin d'enroulement (4,8,14).

2. Procédé suivant la revendication 1, caractérisé par l'utilisation d'un mandrin d'enroulement plat (4,8).

3. Procédé suivant la revendication 2, caractérisé par l'utilisation d'un mandrin d'enroulement plat perdu (8).

4. Procédé suivant la revendication 3, caractérisé par l'utilisation d'un mandrin d'enroulement plat perdu (8) dans sa réalisation sous la forme à barrette et plaque double.

5. Procédé suivant la revendication 1, caractérisé par l'utilisation d'un mandrin d'enroulement (14) , qui est agencé sous la forme d'une roue comportant de multiples sommets (16) reliés par l'intermédiaire de rayons de raccordement.

6. Procédé suivant au moins l'une des revendications 1 à 5, caractérisé par l'utilisation de couches métalliques régénérables en tant qu'électrodes.

7. Procédé suivant au moins l'une des revendications 1 à 5, caractérisé par l'utilisation de couches métalliques épaisses régénérables en tant qu'électrodes.
